# EUROPEAN PATENT APPLICATION

(11) **EP 1 550 864 A2**
(43) Date of publication of application: **06.07.2005**
(21) Application number: 04257657.9
(22) Date of filing: 09.12.2004
(51) Int. Cl.: G01N 30/00

(54) **Analysis method of absolute molecular weight and molecular weight distribution of low-substituted hydroxypropyl cellulose**

(30) Priority: 10.12.2003 JP 2003411104
(71) Applicant: Shin-Etsu Chemical Co., Ltd., Chiyoda-ku Tokyo 100 (JP)
(72) Inventor: Fukasawa, Miyuki, c/o Specialty Chem. Res. Ctr., Kubiki-mura Naka Kubiki-gun Niigata-ken (JP); Obara, Sakae, Chiyoda-ku Tokyo (JP); Hayakawa, Kazuhisa, c/o Specialty Chem. Res. Ctr., Kubiki-mura Naka Kubiki-gun Niigata-ken (JP)
(74) Representative: Davies, Punita Shah

(57) **Abstract**

Provided is a method for determining the absolute molecular weight and molecular weight distribution of low-substituted hydroxypropyl cellulose by using the light scattering method. More specifically, provided is a method for determining the absolute molecular weight and molecular weight distribution of low-substituted hydroxypropyl cellulose comprising steps of carbanilating a portion or all of the hydroxyl groups of the low-substituted hydroxypropyl cellulose, dissolving the carbanilated cellulose in a solvent to prepare a sample solution, and analyzing the resulting sample solution by subjecting it to gel permeation chromatography coupled with light scattering with a solvent identical or similar in kind to the solvent as a mobile phase.

## Description

### BACKGROUND OF THE INVENTION

### 1. Field of the Invention

The present invention relates to an analysis method of low-substituted hydroxypropyl cellulose. More specifically, the invention relates to an analysis method suitable for use in the quality control and performance evaluation of low-substituted hydroxypropyl cellulose by gel permeation chromatography (GPC) coupled with light scattering such as GPC coupled with multiple angle laser light scattering (which will hereinafter be called "GPC-MALLS") or GPC coupled with low angle laser light scattering (which will hereinafter be called "GPC-LALLS").

### 2. Description of the related art

Low-substituted hydroxypropyl cellulose is a cellulose derivative used as an additive to pharmaceuticals and mainly serves as a binder or disintegrant of tablets.

In consideration of its use as such a material, quality control and performance evaluation of it are indispensable. Accordingly, there is a demand for the determination of the absolute molecular weight and molecular weight distribution of low-substituted hydroxypropyl cellulose.

The molecular weight of low-substituted hydroxypropyl cellulose could not be determined using GPC-MALLS, because low-substituted hydroxypropyl cellulose is insoluble in various solvents except a special strong alkaline solvent such as an aqueous solution of copper ethylenediamine or a cadmium ethylenediamine solution. Moreover, such a strong alkaline solvent cannot be used for column to be used in gel permeation chromatography. A method for determining the molecular weight distribution of a polymer by a light scattering method is exemplified in K. Jumel et al., Carbohydrate Polymers 29 (1996) 105-109.

The molecular weight of such a cellulose derivative insoluble in various solvents is conventionally determined by converting it into a cellulose trinitrate, dissolving the resulting product in tetrahydrofuran and subjecting the solution to gel permeation chromatography, as exemplified in TAPPI standard method T-238 su-63. However, this method involves problems, for example, it causes deterioration in polymerization degree, and it requires strict care because of use of a mixed acid of sulfuric acid and fuming nitric acid ("Cellulose no Jiten (encyclopedia of cellulose)", ed. by Cellulose Society of Japan, published by Asakura Shoten, 2000).

It is well-known that a method for determining the absolute molecular weight and molecular weight distribution of a pulp, comprises converting the pulp into tricarbanilated cellulose, dissolving the tricarbanilated cellulose in tetrahydrofuran, and carrying out GPC-MALLS with the resulting solution as a sample solution and with tetrahydrofuran as a mobile phase (see "Chemistry and Processing of Wood and Plant Fibrous Materials", Woodhead Publishing Limited, Chapter 15, 1996).

### SUMMARY OF THE INVENTION

The present invention relates to an analysis method of the absolute molecular weight and molecular weight distribution of low-substituted hydroxypropyl cellulose by using a light scattering method.

The present inventors have carried out an extensive investigation with a view to overcoming the above-described problems. As a result, it has been found that low-substituted hydroxypropyl cellulose which has been carbanilated is soluble in a solvent, leading to the completion of the present invention.

In the present invention, there is thus provided an analysis method of the absolute molecular weight and molecular weight distribution of low-substituted hydroxypropyl cellulose, comprising steps of carbanilating a portion or all (the whole) of the low-substituted hydroxypropyl cellulose, dissolving the carbanilated cellulose in a solvent, and analyzing the resulting solution by subjecting it to GPC coupled with light scattering such as GPC-MALLS or GPC-LALLS while using a solvent identical or similar in kind to the solvent as a mobile phase.

According to the present invention, the absolute molecular weight and molecular weight distribution of low-substituted hydroxypropyl cellulose can be determined efficiently and accurately. Based on the result thus obtained, the quality control and performance evaluation of low-substituted hydroxypropyl cellulose can be carried out conveniently.

### BRIEF DESCRIPTION OF THE DRAWINGS

FIG. 1 illustrates an apparatus for carrying out the method of the present invention; and
FIG. 2 illustrates one of the analysis results obtained using the method of the present invention.

### DETAILED DESCRIPTION OF THE PREFERRED EMBODIMENTS

Low-substituted hydroxypropyl cellulose to be used in the present invention is a cellulose having a hydroxypropoxyl group as a substituent and its substitution degree may be preferably from 10 to 16 wt%. The substitution degree can be measured based on the Japanese Pharmacopoeia.

Low-substituted hydroxypropyl cellulose is obtained by substituting a predetermined portion of three hydroxyl groups per glucose unit of C₆H₁₀O₅ with a hydroxypropoxyl group and the portion substituted with a hydroxypropoxyl group also has a hydroxyl group derived therefrom. The term "carbanilation" as used herein means the carbanilation of the hydroxyl group of this glucose unit and at most three hydroxyl groups can be carbanilated (tricarbanilated) per glucose unit.

According to the present invention, low-substituted hydroxypropyl cellulose becomes soluble in a solvent by being converted into carbanilated cellulose.

In low-substituted hydroxypropyl cellulose, all the substitutable hydroxyl groups are not necessarily carbanilated, but the substitutable hydroxyl groups may be carbanilated within a range necessary for obtaining a solution concentration suitable for the determination by GPC with light scattering such as GPC-MALLS.

Although no particular limitation is imposed on the solvent insofar as it can dissolve therein low-substituted hydroxypropyl cellulose, which has been partially or wholly carbanilated, at a concentration suitable for the determination by GPC with light scattering such as GPC-MALLS, ethers such as tetrahydrofuran (THF) and amines such as dimethylformamide (DMF) are preferred.

The number of the hydroxyl groups to be carbanilated may differ depending on a solvent. When THF is used, a preferable range is from 2.8 to 3.0, more preferably 3.0.

There is no particular limitation imposed on a method of converting low-substituted hydroxypropyl cellulose into carbanilated cellulose. The target low-substituted hydroxypropyl cellulose which has been carbanilated is available preferably by uniformly dispersing the low-substituted hydroxypropyl cellulose in pyridine, adding excess phenyl isocyanate to the resulting dispersion, causing them to react at 90°C for about 3 hours and re-precipitating the reaction mixture in a mixed solvent of methanol-water.

No polymerization breakage occurs in the step of converting into carbanilated cellulose and the converted cellulose is suitable for a light scattering method because a coefficient of refractive index on basis of concentration (which will hereinafter be abbreviated as "dn/dc") is high.

When the carbanilated, low-substituted hydroxypropyl cellulose is added to a solvent (for example, THF), the cellulose dissolves therein. The resulting solution is subjected to for example, GPC-MALLS. By using a known sample introducing apparatus, a predetermined amount of the solution can be injected into GPC-MALLS.

The carbanilated, low-substituted hydroxypropyl cellulose in a sample solution has any concentration insofar as it is suitable for the measurement by GPC-MALLS. It may be preferably from 0.01 to 0.5 wt%, more preferably from 0.05 to 0.2 wt%. If necessary, impurities in the carbanilated, low-substituted hydroxypropyl cellulose solution can be removed by filtering it through a membrane filter prior to the measurement.

The solution injected into GPC-MALLS is subjected to a separation column, with a solvent (for example, THF) identical or similar in kind to the solvent of the sample solution as a mobile phase.

For GPC-MALLS, a separation column may include a column filled with a general-purpose polymer gel such as a column preferably filled with polystyrene as a base material.

A detecting unit of GPC-MALLS may include a combination of a multi-angle light scattering detector and a differential refractometer detector. GPC-LALLS using a low-angle light scattering detector and a differential refractometer detector in combination can also be used for the determination, because the carbanilated, low-substituted hydroxypropyl cellulose exhibits no absorption in the ultraviolet region. The combined use can reveal adsorption condition of the sample to the column or breakage condition of the molecular chain so that the absolute molecular weight can be determined.

According to the present invention, the absolute molecular weight and molecular weight distribution of the carbanilated, low-substituted hydroxypropyl cellulose can be determined by subjecting the solution of the carbanilated, low-substituted hydroxypropyl cellulose to GPC with light scattering such as GPC-MALLS and fractionally collecting an eluate therefrom. The absolute molecular weight thus obtained is divided by the molecular weight of the monomer of the carbanilated, low-substituted hydroxypropyl cellulose to fmd the value of the polymerization degree. Then, the polymerization degree is multiplied by the molecular weight of the monomer of the low-substituted hydroxypropyl cellulose monomer so as to obtain the absolute molecular weight of the low-substituted hydroxypropyl cellulose.

In the present invention, the absolute molecular weight is preferably a weight average absolute molecular weight. It is not a relative value available using another substance as a standard, but an average, by weight fraction, of the absolute value obtained from a theoretical equation by the light scattering method.

The molecular weight distribution of the invention is a value obtained by dividing a weight average molecular weight by a number average molecular weight.

An example of an apparatus for carrying out the method of the invention will next be described based on a drawing, but the invention is not limited to or by it.

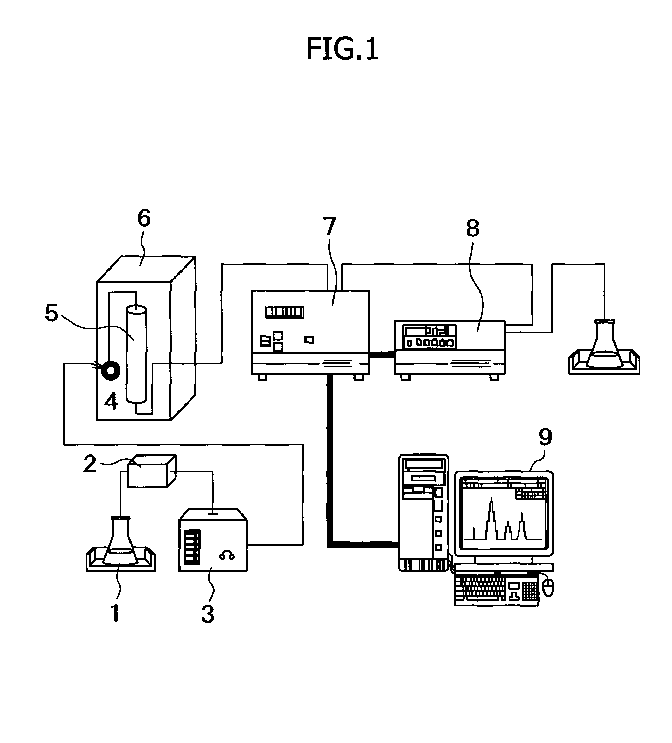

FIG. 1 illustrates one example of an apparatus for carrying out the invention method, comprising a mobile phase reservoir 1, an on-line degasser 2, a feed pump 3, a manual injector 4, a column 5, a column oven 6, a multi-angle light scattering detector 7, a difference refractometer detector 8 and a data processing unit 9.

Upon analysis, a mobile phase is fed from the mobile phase reservoir 1 by the pump 3 in advance so as to reach a steady state. A sample is then injected from the manual injector 4. The sample thus injected is fed with the mobile phase to the column 5 in the column oven 6 and its absolute molecular weight and molecular weight distribution are detected by the multi-angle light scattering detector 7 and difference refractometer detector 8. The data thus obtained is processed in the data processing unit 9, at which the molecular weight is calculated.

Analysis was made using the above apparatus under the following analysis condition.

### <Pretreatment of sample>

The 170 mg of Low-substituted hydroxypropyl cellulose (product of Shin-Etsu Chemical Co., Ltd.) was dispersed in 15 ml of pyridine by stirring overnight. To the resulting dispersion was added 2 ml of phenyl isocyanate (product of Wako Pure Chemical Industries, Ltd.), followed by heating under reflux at 90°C. After heating under reflux for 3 hours, 1 ml of methanol (product of Wako Pure Chemical Industries, Ltd.) was added to decompose excess phenyl isocyanate. The resulting solution was gradually added dropwise to a mixed solution of 70 ml of methanol, 30 ml of distilled water and 2 ml of glacial acetic acid to cause reprecipitation. The solution was then subjected to suction filtration through a glass filter having a pore size of from 40 to 50 µm. The precipitate thus obtained was dispersed, stirred and washed in 100 ml of methanol. The dispersion was subjected again to suction filtration through a glass filter having a pore size of from 40 to 50 µm. By repeating these operations twice or thrice, pyridine was completely removed. The residue was then dried, whereby the target tricarbanilated, low-substituted hydroxypropyl cellulose was obtained.

The 10 mg of the resulting tricarbanilated, low-substituted hydroxypropyl cellulose was dissolved in 10 ml of tetrahydrofuran, followed by filtration through a membrane filter (pore size: 0.45 µm, product of ADVANTEC).

It was confirmed by an elementary analysis that the molar substitution of the carbanilate group was 3, indicating that the resulting low-substituted hydroxypropyl cellulose had been tricarbanilated accurately.
<Coefficient of refractive index on basis of concentration (which will hereinafter be abbreviated as "dn/dc")>

Low-substituted hydroxypropyl cellulose (product of Shin-Etsu Chemical Co., Ltd.) was tricarbanilated as described above and dissolved in tetrahydrofuran to prepare five solutions different in concentration (from 0.05 W/V% to 0.3 W/V%). The dn/dc was measured in accordance with the static light scattering method by using a high-sensitivity differential refractometer ("DRM-1021", product of Otsuka Electronics Co., Ltd.).

### <Analysis conditions>

Column: "TSK guard column Super H-L" (product of TOSOH Corporation)
   "TSK gel Super H 2000" (product of TOSOH Corporation)
   "TSK gel Super H 3000" (product of TOSOH Corporation)
   "TSK gel Super H 4000" (product of TOSOH Corporation)
   "TSK gel Super H 5000" (product of TOSOH Corporation)
Mobile phase: tetrahydrofuran
Degasser: "ERC-3115" (product of ERC Inc.)
Flow rate: 0.4 ml/min
Temperature: 40°C
Injector: "Model 7125" (product of Rheodyne LLC)
   Multi-angle light scattering detector: "DAWN DSP" (product of Wyatt Technology Corporation)
   Differential refractometer detector: "RI-71" (product of Showa Denko K.K.) dn/dc: 0.170 mL/g

### <Analysis results>

As a result of analysis under the above-described conditions, the tricarbanilated, low-substituted hydroxypropyl cellulose had a weight average molecular weight of 360,000 g/mol and the molecular weight distribution (weight average molecular weight divided by number average molecular weight) was 1.70. The molecular weight of the converted monomer was 532.6 g/mol and the monomer of the low-substituted hydroxypropyl cellulose before the conversion was 176.32 g/mol. Based on them, the weight average molecular weight of the low-substituted hydroxypropyl cellulose before the conversion was 119,000 g/mol and its molecular weight distribution was 1.70.

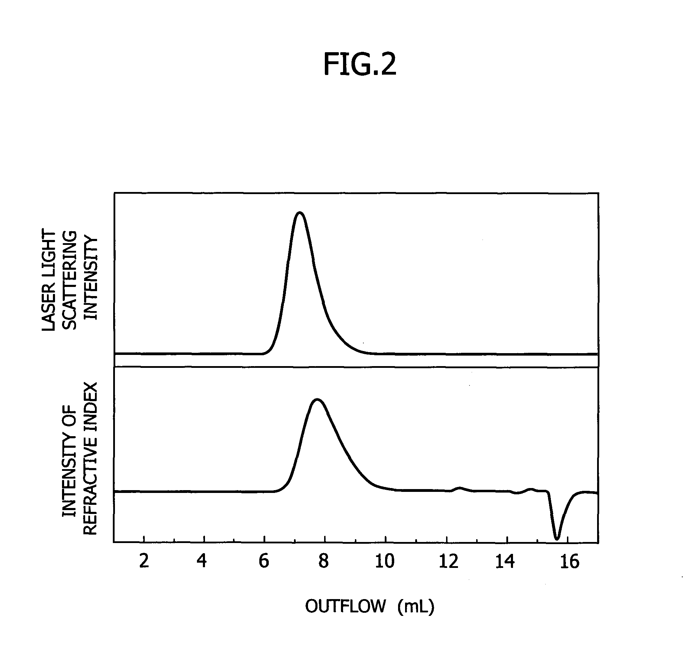

The results are illustrated in FIG. 2. The peak of FIG. 2 is that of the tricarbanilated, low-substituted hydroxypropyl cellulose. Thus, according to the present invention, the tricarbanilated low-substituted hydroxypropyl cellulose can be analyzed with good sensitivity. In FIG. 2, a light scattering intensity and a signal intensity of refractive index are plotted along the ordinate, while the outflow (mL) is plotted along the abscissa.

## Claims

1. A method for determining an absolute molecular weight and molecular weight distribution of low-substituted hydroxypropyl cellulose, comprising steps of:
carbanilating a portion or all of hydroxyl groups of the low-substituted hydroxypropyl cellulose;
dissolving the resulting carbanilated low-substituted hydroxypropyl cellulose in a solvent to prepare a sample solution; and
analyzing the sample solution by subjecting the solution to gel permeation chromatography coupled with light scattering while using a solvent identical or similar in kind to the solvent as a mobile phase.

2. A method for determining an absolute molecular weight and molecular weight distribution of low-substituted hydroxypropyl cellulose according to claim 1, wherein the solvent is an ether or an amine.

3. The method for determining an absolute molecular weight and molecular weight distribution of low-substituted hydroxypropyl cellulose according to Claim 2, wherein said solvent is tetrahydrofuran.

4. A method for determining an absolute molecular weight and molecular weight distribution of low-substituted hydroxypropyl cellulose according to claim 2 wherein said solvent is dimethylformamide.

5. A method for determining an absolute molecular weight and molecular weight distribution of low-substituted hydroxypropyl cellulose according to claim 3, wherein the number of hydroxyl group to be carbanilated is 2.8 to 3.0, preferably 3.0.

6. A method for determining an absolute molecular weight and molecular weight distribution of low-substituted hydroxypropyl cellulose according to any one of claims 1 to 5 wherein the cellulose is carbanilated by uniformly dispersing the cellulose in pyridine, adding excess phenyl isocyanate and causing them to react at 90° for approximately three hours, and re-precipitating in methanol-water.

7. A method for determining an absolute molecular weight and molecular weight distribution of low-substituted hydroxypropyl cellulose according to any one of claims 1 to 6 wherein the sample solution is subjected to GPC-MALLS.

8. A method for determining an absolute molecular weight and molecular weight distribution of low-substituted hydroxypropyl cellulose according to any one of claims 1 to 7 wherein the concentration of cellulose in a sample solution is 0.01 to 0.5%wt.

9. A method for determining an absolute molecular weight and molecular weight distribution of low-substituted hydroxypropyl cellulose according to any one of the previous claims wherein the absolute molecular weight is obtained by dividing the absolute weight of the carbanilated cellulose by the molecular weight of the monomer of the carbanilated cellulose, and then multiplying by the molecular weight of the momomer of the non-carbanilated momomer.
